# EUROPEAN PATENT SPECIFICATION

(11) **EP 0 660 090 B1**
(45) Date of publication and mention of the grant of the patent: **12.09.2001**
(21) Application number: 95100012.4
(22) Date of filing: 15.06.1988
(51) Int. Cl.: G01F 1/68, G01F 5/00, F02D 41/18

(54) **Hot-wire type air-flow meter arrangement for internal combustion engines**
Hitzdraht-Luftmengenmesser-Anordnung für Brennkraftmaschinen
Arrangement d'un débitmètre d'air de type à fil chaud pour moteurs à combustion interne

(30) Priority: 17.06.1987 JP 14899387
(43) Date of publication of application: 28.06.1995
(62) Divisional of application: 88109534.3
(73) Proprietor: Hitachi, Ltd., Chiyoda-ku, Tokyo 101 (JP)
(72) Inventor: Arai, Nobukatsu, Ushiku-shi (JP); Sekine, Yoshihito, Niihari-gun, Ibaraki-ken (JP); Osawa, Tadao, Katsuta-shi (JP); Tokuda, Hiroatsu, Katsuta-shi (JP); Usui, Toshifumi, Katsuta-shi (JP); Tsutsui, Mitsukuni, Naka-gun, Ibaraki-ken (JP)
(74) Representative: Beetz & Partner Patentanwälte

(56) References cited:
- EP-A- 0 055 482
- EP-A- 0 082 484
- EP-A- 0 087 621
- EP-A- 0 173 946
- DE-A- 3 044 553
- DE-A- 3 103 170
- JP-A- 57 023 818
- JP-U-61 122523 (NISSAN MOTOR CO. , LTD) XP002000355

## Description

The present invention relates to a hot-wire type air flow meter arrangement and more particularly to a hot-wire type flow meter arrangement for an automotive internal combustion engine which constitutes an intake system of the internal combustion engine, and adapted to detect and control an flow rate of intake air.

As shown in, for example, JP-U-56-135127 and JP-A-60-185118, there has been provided a conventional passage structure for a hot-wire type air-flow meter for automotive engines, in which an auxiliary flow path is formed in the intake pipe; a hot-wire element is arranged in the auxiliary flow path; an obstacle or a complicated bent flow path which is long in the axial direction is provided downstream of the hot-wire element for the purpose of protecting the hot-wire element against backfiring or backblowing of the engine and for the purpose of preventing an abnormal output of the hot-wire element caused by pulsations of the engine. In such an air-flow meter, since the auxiliary path portion including the hot-wire element is formed in such manner as to be exposed to the primary flow, the output error caused by a temperature increase of the flow meter body is small. However, this arrangement requires a long physical length in the axial direction and a large number of mechanical parts which makes assembly difficult. Therefore, this arrangement suffers from disadvantages regarding compactness and cost.

Also, as disclosed in, for example, JP-A-57-23818 and 57-113926, there has been proposed an arrangement in which a hot-wire type air-flow meter and throttle valve means are disposed close to each other in an integral body. In JP-A-57-23818, the same techniques as those in the foregoing two publications are adopted in the arrangement in which the auxiliary passage within which the hot-wire element is disposed is defined by a straight pipe and is formed in the central portion of the primary passage. However, in the publication JP-A-57-23818, there are no protection means provided for the hot-wire element against backfiring and backblowing of the engine. The throttle valve being provided downstream of the auxiliary flow path may serve to protect the hot-wire element under the condition it is almost closed. However, the throttle valve has no function as protection means under full or almost full open condition. Also, in addition, this arrangement suffers from the further problem that the flow within the auxiliary flow path is affected by the movement of the throttle valve which renders the flow unstable. In JP-A-57-113926, an air-flow meter is described in which the hot-wire element is disposed in an auxiliary flow path, which extends within the wall of the body having a large thermal capacity and a relatively limited heat transfer area and which is defined by an L-shaped structure consisting of a first flow path parallel to the primary flow and a second flow path perpendicular to the first flow path. With such an arrangement, it is possible to protect the hot-wire element against backblowing or backfiring of the engine. However, due to the structure of the auxiliary flow path, since the air of the primary flow cannot flow around the auxiliary flow path wall, the temperature of the auxiliary flow path wall is highly increased due to the heat generated by the hot-wire element and the heat transferred from the engine.

As a result, the air within the auxiliary flow path is heated giving rise to a large difference in temperature between the air in the auxiliary flow path and the air in the primary flow path. Thus, it is impossible to exactly measure the flow rate of the intake air.

US-A-4 393 697 discloses an contilever arrangement of an air-flow meter with an axially extending auxiliary flow path provided within the primary flow path at the outlet end of which a wall is arranged for backfiring protection.

US-A-4 527 423 discloses a hot-wire air-flow meter comprising a primary flow path and an auxiliary flow path consisting of an axially extending inlet portion and an outlet portion perpendicular to the inlet portion, wherein the auxiliary flow path is completely provided within the body of the air-flow meter. Upstream of the level of the inlet opening of the auxiliary flow path the primary flow path has a larger diameter than downstream thereof, forming a shoulder at the level of the inlet opening of the auxiliary flow path.

In EP-A-173 946 an air-flow meter is described where the auxiliary flow path is located substantially in the central portion of the primary flow path. It comprises an axial inlet portion and a radial outlet portion of short axial length. According to this prior art, the flow through the auxiliary flow path is first axial in the axial inlet portion, is then deviated by 180° to be axial again in counterflow direction, and enters thereafter into a radial part comprising an outlet opening into the primary flow path at a lateral face of the air-flow meter block.

The foregoing prior art is silent with respect to the reduction of the pipe path length between the hot-wire type air-flow meter and the throttle valve means. Therefore, the prior art suffers from the problems of an increased pressure loss in the intake passage and of increased weight and cost of the equipment. Moreover, the prior art encounters the following difficulties: The heat generation of the hot-wire element; the temperature increase of the auxiliary flow path wall around the hot-wire element due to the heat input from the outside, that is, an error due to the difference between the temperature of the actual intake air and the temperature of the air flowing through the auxiliary flow path while impinging against the hot-wire element and the temperature compensation element; countermeasures against a change of the ratio of the flow rate of the primary flow and the auxiliary path due to swirls or a change of the intake air or a change of the flow downstream of the air-flow meter; a reduction of flow turbulence within the auxiliary flow path, that is, a reduction of the output noise; a protection of the elements against counterflow due to backblowing or backfiring and the countermeasures against abnormal output due to pulsations.

Accordingly, it is the object of the present invention to provide a hot-wire type air-flow meter arrangement which is compact and has a high measuring precision, and an improved backfiring protection, thus allowing to control the air/fuel ratio of internal combustion engines in a suitable manner.

The above object is achieved according to the independent claim. The dependent claim relates to a preferred embodiment.

According to the present invention, the hot-wire element is disposed in an auxiliary flow path independent of the primary flow path, thereby reducing adverse effects of turbulence in the primary flow path. Also, the auxiliary flow path has a small diameter relative to that of the primary flow path. Also, the auxiliary flow path is bent downstream of the element, so that the flow at the bent portion and the pressure damping effect prevent a damage of the hot-wire element due to counterflow and reduce the adverse effects of pulsation.

In the following, the invention will be explained with reference to a preferred embodiment and to a drawing.

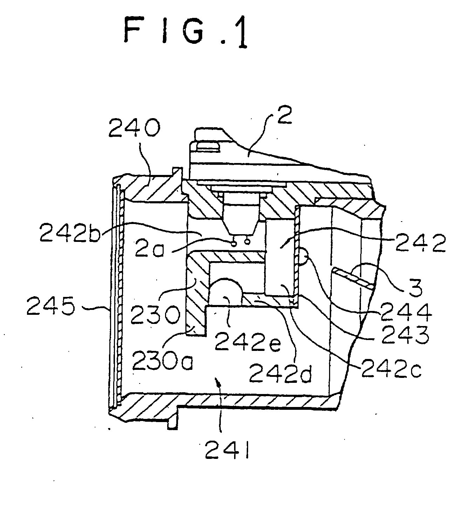

Fig. 1 shows a cross-sectional view of an embodiment of the invention.

Fig. 1 shows an embodiment of the invention which realizes an auxiliary flow path having a relatively large fluid resistance with a structure in which the axial dimension is not increased. In a probe holder block 230 which is a member separate from the body 240 and is coupled to a circuit unit 2, the entire auxiliary flow path 242 is formed of an auxiliary flow path portion 242b in parallel to the primary flow path 241, an auxiliary flow path portion 242c having a square cross-section and extending perpendicular to the flow path 242b, an auxiliary flow path portion 242d directed to the upstream side against the primary flow, perpendicular to the auxiliary flow path 242c, and an auxiliary flow path portion 242e directed in the radial direction, perpendicular to the auxiliary flow path portion 242d. The downstream wall of the auxiliary flow path portion 242c relative to the primary flow is formed by a planar cover 243 which is fixed to the holder block 230 by means of a bolt 244. In this embodiment, since the length of the auxiliary flow path portion 242b upstream of the hot-wire element 2a is short due to its structure, a mesh member 245 is provided at the inlet opening of the body 240. Also, the upstream wall of the holder block 230 relative to the primary flow extends further into the primary flow path relative to the outlet 242e of the auxiliary flow path so that the primary flow is prevented from impinging directly to the outlet 242e of the auxiliary flow path, thus stabilizing the static pressure thereat and the flow within the auxiliary flow path to reduce the noise.

In this embodiment, the fluid resistance of the auxiliary flow path 242 is composed of the frictional resistance in proportion to the long passage length and the passage configuration resistance element composed of three right-angled bends. The equivalent length of the passage the eleventh embodiment is longer than that of the tenth embodiment. In other words, this embodiment is strongly effective against backblowing, backfiring and intake pulsations. Also, if the fluid resistance of the auxiliary flow path, and in particular, the configuration resistance are increased, it is possible to decrease the flow rate distribution ratio of the auxiliary flow path to the primary flow path at high flow rates (high speed region). This makes it possible to reduce the flow rate in the vicinity of the hot-wire element which is available against contamination due to adhesion of dust or foreign matters.

In this embodiment, in view of the working formation of the auxiliary flow path 242, the auxiliary flow path 242 is formed separately from the body 240 and detachably mounted to the body 240.

## Claims

1. Hot-wire type air-flow meter arrangement, comprising:
- a primary flow path (241) formed in a body (240) and constituting an intake air passage of an internal combustion engine,
- a block (230) in which an auxiliary flow path (242) is formed,
wherein the auxiliary flow path (242) includes
- a first path portion (242b) being parallel to the primary flow path (241) and being opened to the upstream side of the primary flow path (241),
- a second path portion (242c) being connected of the outlet end of the first path portion (242b) and being perpendicular to the first path portion (242b),
- a third path portion (242d) being connected of the outlet end of the second path portion (242c), being perpendicular to the second path portion (242c) and directed to the inlet side of the first path portion (242b), and
- a fourth path portion (242e) being connected of the outlet end of the third path portion (242d) and being perpendicular to the third path portion (242b),
- a circuit unit (2) coupled to the block (230),
- a hot-wire element (2a) connected with the circuit unit (2),
wherein the hot-wire element (2a) is inserted into the first path portion (242b) through a wall of the first path portion (242b) adjacent to the circuit unit (2),
**characterized in that**
- a mesh member (245) is provided at the inlet opening of the primary flow path (241),
- the block (230) is inserted removably through the wall of the body (240) in a cantilever condition in the primary flow path (241),
- the fourth path portion (242e) is directed in radial direction of the primary flow path (241),
- the fourth path portion (242e) opend into the primary flow path (241) in radial direction of the primary flow path (241) on the underside of the block (230) opposite to the side where the circuit unit (2) is located, and
- the upstream wall (230a) of the block (230) relative to the primary flow extends further into the primary flow path (241) in radial direction towards the side of the primary flow path (241) opposite the side where the circuit unit (2) is located, relative to the outlet of the fourth path portion (242e).

2. Hot-wire type air-flow meter arrangement according to claim 1 **characterized in that** the second path portion (242c) has a square cross-section.

## Patentansprüche

1. Hitzdraht-Luftmengenmesseranordnung, mit
- einem Hauptströmungspfad (241), der in einem Körper (240) ausgebildet ist und einen Einlaßluftkanal einer Brennkraftmaschine bildet,
- einem Block (230) in dem ein Hilfsluftpfad (242) ausgebildet ist,
wobei der Hilfsluftkanal (242)
- einen ersten Pfadabschnitt (242b) enthält, der parallel zum Hauptluftpfad (241) ist und zur stromaufliegenden Seite des Hauptluftpfads (241) geöffnet ist,
- einen zweiten Pfadabschnitt (242c) enthält, der mit dem Auslaßende des ersten Pfadabschnitts (242b) verbunden ist und senkrecht zu dem ersten Pfadabschnitt (242b) ist,
- einen dritten Pfadabschnitt (242d) enthält, der mit dem Auslaßende des zweiten Pfadabschnitts (242c) verbunden ist und senkrecht zu dem zweiten Pfadabschnitt (242c) ist und zur Einlaßseite des ersten Pfadabschnitts (242b) gerichtet ist, und
- einen vierten Pfadabschnitt (242e) enthält, der mit dem Auslaßende des dritten Pfadabschnitts (242d) verbunden ist und senkrecht zu dem dritten Pfadabschnitt (242d) ist,
- einer Schaltungseinheit (2), die mit dem Block (230) gekoppelt ist, und
- einem Hitzdrahtelement (2a), das mit der Schaltungseinheit (2) verbunden ist, wobei das Hitzdrahtelement (2a) in den ersten Pfadabschnitt (242b) durch eine Wand des ersten Pfadabschnitts (242b) nahe der Schaltungseinheit (2) eingesetzt ist,
**dadurch gekennzeichnet, daß**
- ein Gitterteil (245) ein der Einlaßöffnung des Hauptströmungspfads (241) vorgesehen ist,
- der Block (230) durch die Wand des Körpers (240) in den Hauptströmungskanal (241) entfernbar und freitragend eingesetzt ist,
- der vierte Pfadabschnitt (242e) in radialer Richtung des Hauptströmungspfads (241) ausgerichtet ist,
- der vierte Pfadabschnitt (242e) sich in den Hauptströmungspfad (241) in radialer Richtung des Hauptströmungspfads (241) an der Unterseite des Blocks (230) gegenüberliegend zu der Seite wo die Schaltungseinheit (2) angeordnet ist, öffnet und
- die stromaufliegende Wand (230a) des Blocks (230) sich relativ zu der Hauptströmung weiter in den Hauptströmungspfad (241) in radialer Richtung erstreckt, in Richtung der Seite des Hauptströmungspfads (241) gegenüberliegend zu der Seite, wo die Schaltungseinheit (2) angeordnet ist, relativ zum Auslaß des vierten Pfadabschnitts (242e).

2. Hitzdraht-Luftströmungsmesseranordnung gemäß Anspruch 1, **dadurch gekennzeichnet, daß** der zweite Pfadabschnitt (242c) einen rechteckigen Querschnitt aufweist.

## Revendications

1. Agencement de débitmètre d'air du type à fil chaud comprenant :
- un trajet d'écoulement principal (241) formé dans un corps (240) et constituant un passage d'admission d'un moteur à combustion interne,
- un bloc (230) dans lequel est formé un trajet d'écoulement auxiliaire (242), le trajet d'écoulement auxiliaire (242) comprenant
- une première partie de trajet (242b) parallèle au trajet d'écoulement principal (241) et s'ouvrant vers le côté amont du trajet d'écoulement principal (241), une seconde partie de trajet (242c) reliée à l'extrémité de sortie de la première partie de trajet (242b) et perpendiculaire à la première partie de trajet (242b),
- une troisième partie de trajet (242d) reliée à l'extrémité de sortie de la seconde partie de trajet (242c), perpendiculaire à la seconde partie de trajet (242c) et dirigée vers le côté d'entrée de la première partie de trajet (242b) et
- une quatrième partie de trajet (242e) reliée à l'extrémité de sortie de la troisième partie de trajet (242d) et perpendiculaire à la troisième partie de trajet (242d)
- une unité de circuit (2) reliée au bloc (230),
- un élément à fil chaud (2a) relié à l'unité de circuit (2), l'élément à fil chaud (2a) étant inséré dans la première partie de trajet (242b) à travers une paroi de la première partie de trajet (242b) adjacente à l'unité de circuit (2),
**caractérisé en ce que**
- un élément à mailles (245) est disposé dans l'ouverture d'entrée du trajet d'écoulement principal (241),
- le bloc (230) est inséré de manière amovible à travers la paroi du corps (240) dans une disposition en porte-à-faux dans le trajet d'écoulement principal (241),
- la quatrième partie de trajet (242e) est dirigée dans le sens radial du trajet d'écoulement principal (241),
- la quatrième partie de trajet (242e) s'ouvre dans le trajet d'écoulement principal (241) dans le sens radial du trajet d'écoulement principal (241) sur le côté inférieur du bloc (230) opposé au côté où est située l'unité de circuit et (2) et
- la paroi amont (230a) du bloc (230) par rapport à l'écoulement principal s'étend en outre dans le trajet d'écoulement principal (241) dans le sens radial en direction du côté du trajet d'écoulement principal (241) opposé au côté où est située l'unité de circuit (2) par rapport à la sortie de la quatrième partie de trajet (242e)

2. Agencement de débitmètre du type à air chaud selon la revendication 1, **caractérisé en ce que** ladite seconde partie de trajet (242c) possède une section carrée.
